# EUROPÄISCHE PATENTSCHRIFT

(11) **EP 3 162 718 B1**
(45) Veröffentlichungstag und Bekanntmachung des Hinweises auf die Patenterteilung: **28.08.2019**
(21) Anmeldenummer: 16193118.3
(22) Anmeldetag: 10.10.2016
(51) Int. Cl.: B65B 31/02

(54) **VAKUUMSCHUBLADE ZUM VAKUUMIEREN VON LEBENSMITTELN**
VACUUM DRAWER FOR VACUUMING FOODS
TIROIR DE VIDE POUR ASPIRER DES ALIMENTS

(30) Priorität: 15.10.2015 DE 102015013444
(43) Veröffentlichungstag der Anmeldung: 03.05.2017
(73) Patentinhaber: MICHATEK, k.s., 07101 Michalovce (SK)
(72) Erfinder: Bocks, Stefan, 83112 Frasdorf (DE); Harlander, Florian, 6342 Niederndorf (AT)
(74) Vertreter: Hofstetter, Schurack & Partner

(56) Entgegenhaltungen:
- EP-A1- 2 974 969
- WO-A1-2004/065222
- US-A1- 2005 102 975

## Beschreibung

Die Erfindung betrifft eine Vakuumschublade zum Vakuumieren von Lebensmitteln nach dem Oberbegriff des Anspruchs 1. Die Vakuumschublade umfasst eine Vakuumkammer, die durch einen betätigbaren Deckel luftdicht verschließbar ist, und eine Montageeinheit, an die eine Vakuumpumpe anschließbar ist.

Vakuumiergeräte umfassen eine Vakuumkammer, in die ein geeignetes Behältnis, beispielsweise in Form eines versiegelbaren Beutels, eingelegt wird. Innerhalb der Kammer erstreckt sich ein Schweißbalken, der in vertikaler Richtung höhenverstellbar ist. Das mit Lebensmitteln befüllte Behältnis wird in die Vakuumkammer eingelegt, diese im Anschluss über einen Deckel luftdicht verschlossen, um mittels einer Vakuumpumpe ein Kammervakuum zu erzeugen.

Da der Schweißbalken zunächst in geöffneter Stellung positioniert ist, kann auch die Luft aus dem Behältnis abgesaugt werden. Im Anschluss wird der Schweißbalken höhenverstellt und der Beutel zwischen Schweißbalken und Gegenstelle eingeklemmt. Über die zugeführte Schweißenergie wird der Beutel versiegelt.

Aus der DE 10 2014 010 569 A1 ist eine Vakuumschublade bekannt.

Die EP 0 405 680 A2 offenbart ein Kühlgerät mit einem evakuierbaren Behälter.

Aus der DE 33 35 151 A1 ist ein Folienschweißgerät für Haushaltszwecke bekannt, das eine Pumpe und einen Luftkanal mit einer Flüssigkeitssperre aufweist.

Die JP 3 484 318 B2 offenbart ein weiteres Vakuumiergerät.

Die WO2004/065222 A1 offenbart eine Vakuumverpackungsvorrichtung, die zur Erzeugung eines Vakuums in einer Vielzahl unterschiedlicher Behälter geeignet ist.

Eine Vakuumschublade nach dem Oberbegriff des Anspruchs 1 ist aus der früher angemeldeten, nachveröffentlichten EP 2 974 969 A1 bekannt.

Das Vakuum in der Vakuumkammer wird durch eine Vakuumpumpe erzeugt, die sich außerhalb der Vakuumkammer befindet. Die bisher bekannten Lösungen zum Anschluss der Vakuumpumpe an der Vakuumkammer sind verbesserungsbedürftig. Insbesondere besteht in bestimmten Fällen ein Bedürfnis, ein Vakuum nicht in der Vakuumkammer, sondern an einer anderen Stelle zu erzeugen, also ein externes Vakuum zu erzeugen.

Aufgabe der Erfindung ist es, eine Vakuumschublade der eingangs angegebenen Art vorzuschlagen, bei der auf einfache Weise ein externes Vakuum erzeugt werden kann.

Erfindungsgemäß wird diese Aufgabe durch die Merkmale des Anspruchs 1 gelöst. Die Vakuumschublade zum Vakuumieren von Lebensmitteln umfasst eine Vakuumkammer, die durch einen betätigbaren Deckel luftdicht verschließbar ist. Der Deckel kann teilweise oder vollständig aus Glas bestehen. Die Vakuumschublade umfasst ferner einen Schweißbalken und eine Montageeinheit, an die eine Vakuumpumpe anschließbar ist. Die Montageeinheit ist an der Vakuumkammer befestigt, insbesondere an einer Seitenwand der Vakuumkammer.

Ferner ist ein Anschlussteil vorgesehen, das mit der Montageeinheit lösbar verbindbar ist.

Erfindungsgemäß ist das Anschlussteil mit einem Saugschlauch verbunden. Das andere Ende des Saugschlauchs kann mit der Stelle, an der das externe Vakuum erzeugt werden soll, verbunden werden, insbesondere mit einem externen Vakuumbehälter oder einem anderweitig externen Behältnis, beispielsweise einer Weinflasche oder einem Einmachglas. Das externe Vakuum kann außerhalb der Vakuumkammer erzeugt werden.

Hierdurch kann bei Bedarf einfach und schnell ein externes Vakuum erzeugt werden. Durch die Verbindung des Anschlussteils mit der Montageeinheit wird eine Verbindung zur Vakuumpumpe hergestellt, so dass an dem Anschlussteil ein externes Vakuum abgegriffen werden kann.

Vorteilhafte Weiterbildungen sind in den Unteransprüchen beschrieben.

Vorteilhaft ist es, wenn das Anschlussteil einen oder mehrere Magnete aufweist. Der oder die Magnete dienen zur Befestigung des Anschlussteils an der Montageeinheit und/oder an einer Seitenwand der Vakuumkammer.

Die Montageeinheit kann ein ferromagnetisches Abstützteil aufweisen. Vorteilhaft ist es, wenn das Abstützteil aus einem ferromagnetischen Material hergestellt ist oder ein ferromagnetisches Material enthält. Unter einem ferromagnetischen Material ist dabei ein Material zu verstehen, das von einem Magneten angezogen werden kann. Das ferromagnetische Material muss nicht seinerseits magnetisch sein. Es ist ausreichend, wenn es mit einem Magneten kraftmäßig zusammenwirken kann. Insbesondere ist das ferromagnetische Material ein Material, das aus Eisen besteht oder das Eisen enthält. Das Abstützteil kann als Gegenstück zu dem oder den Magneten des Anschlussteils dienen. Das Abstützteil kann als vorzugsweise ferromagnetisches Blech ausgebildet sein. Vorteilhaft ist es, wenn sich das Abstützteil an der Außenseite der Vakuumkammer befindet.

Die Anordnung kann auch umgekehrt getroffen sein. Es ist also möglich, dass das Abstützteil oder ein sonstiges Teil des Montageteils Magnete aufweist und dass das Anschlussteil ferromagnetisch ist oder einen ferromagnetischen Bestandteil aufweist.

Die Montageeinheit kann einen Sensor aufweisen. Der Sensor kann zum Erkennen der Befestigung des Anschlussteils an der Montageeinheit und damit an der Vakuumkammer dienen. Der Sensor kann an dem Abstützteil und/oder an einem der sonstigen Bestandteile des Montageteils vorgesehen sein. Vorzugsweise handelt es sich um einen Reed-Sensor. Der Sensor kann mit der Steuerung der Vakuumschublade in Wirkverbindung stehen. Insbesondere kann der Sensor erkennen, dass ein externes Vakuum gewünscht ist. Hierdurch kann von der Steuerung, die durch eine Software realisiert sein kann, die Funktion "internes Vakuum" in die Funktion "externes Vakuum" geändert werden.

Vorteilhaft ist es, wenn das Anschlussteil eine Wassersperre aufweist. Es kann sich um eine hydrophile oder hydrophobe Wassersperre handeln.

Stattdessen oder zusätzlich kann die Montageeinheit einen Feinstfilter gegen Fremdstoffe aufweisen.

Die Wassersperre ist vorzugsweise als Membran ausgebildet. Die Membran kann aus einem geeigneten Textilmaterial, insbesondere Goretex, oder aus PTFE oder aus einem sonstigen geeigneten Werkstoff hergestellt sein.

Nach einer weiteren vorteilhaften Weiterbildung ist die Membran eingeklemmt. Dies erfolgt vorzugsweise durch einen O-Ring.

Vorteilhaft ist es, wenn die Membran durch eine Stützstruktur abgestützt ist. Dadurch kann eine übermäßige Verformung der Membran im Betrieb verhindert werden. Die Stützstruktur weist vorzugsweise Lamellen auf.

Die Vakuumschublade ist zweckmäßigerweise zum Einbau innerhalb eines Möbelstückes geeignet. Die Abmessung der Vakuumschublade entspricht vorzugsweise etwaigen Normvorgaben für die Dimensionierung eines derartigen Möbelstückes. Insbesondere dient die Vakuumschublade zum Einbau in eine Küchenschublade.

Dementsprechend betrifft die Erfindung auch ein Möbelstück mit eingebauter Vakuumschublade gemäß der vorliegenden Erfindung. Sowohl das Möbelstück als auch die Vakuumschublade zeichnen sich folglich durch dieselben Vorteile und Eigenschaften aus, wie sie bereits verdeutlicht wurden. Auf eine wiederholende Beschreibung wird aus diesem Grund verzichtet.

Weitere Vorteile und Eigenschaften der Erfindung sollen im folgenden anhand eines in den Zeichnungen dargestellten Ausführungsbeispiels näher erläutert werden. Es zeigen:
- Fig. 1a - 1d: die erfindungsgemäße Vakuumschublade aus vier unterschiedlichen Blickwinkeln,
- Fig. 2: die Vakuumkammer der Vakuumschublade mit einer Montageeinheit und einem Anschlussteil in einer perspektivischen Explosionsdarstellung,

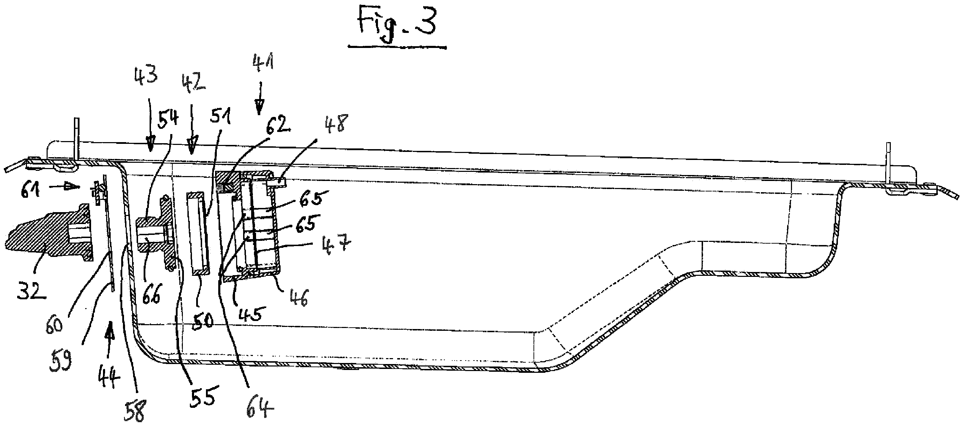

- Fig. 3: die Vakuumkammer mit der Montageeinheit und dem Anschlussteil in einer seitlichen Explosionsdarstellung im Schnitt,

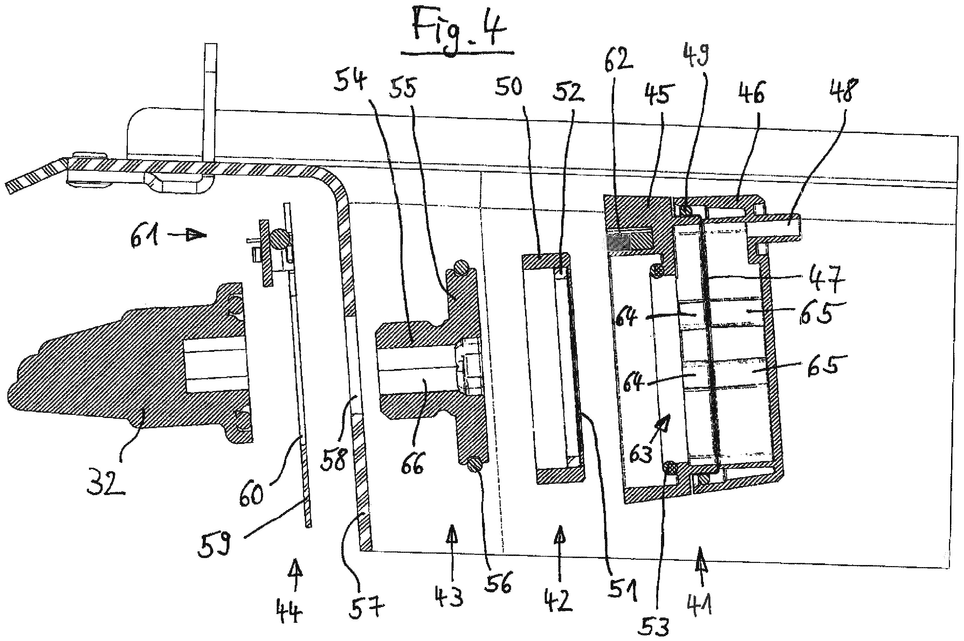

- Fig. 4: eine Einzelheit aus der Fig. 4 in einer vergrößerten Darstellung,
- Fig. 5: die Montageeinheit und das Anschlussteil im montierten Zustand,
- Fig. 6: das Anschlussteil in einer vergrößerten Schnittdarstellung und
- Fig. 7: das in Fig. 6 gezeigten Anschlussteil in einer perspektivischen Explosionsdarstellung.

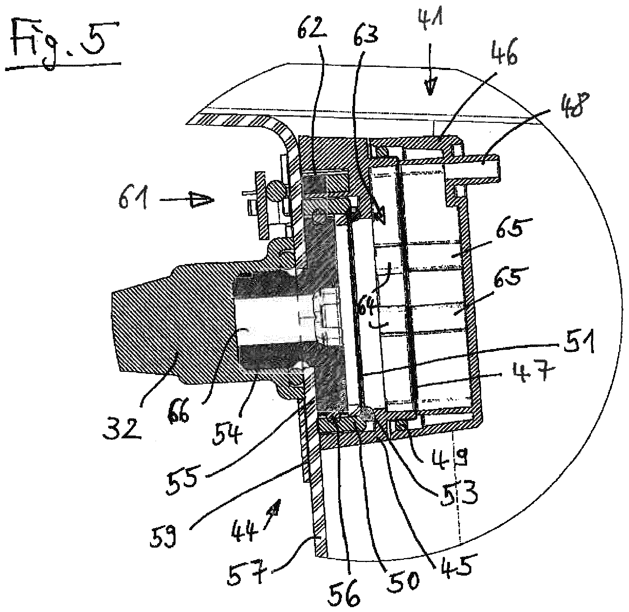

- Fig. 5: die Montageeinheit und das Anschlussteil im montierten Zustand,

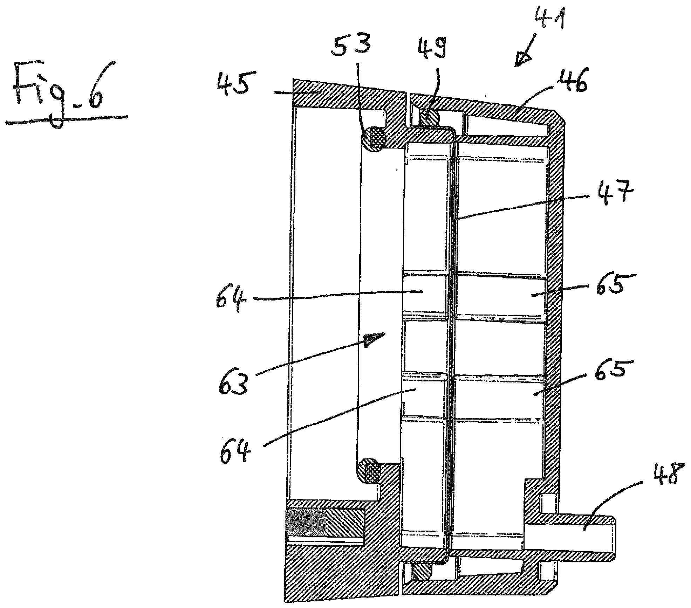

- Fig. 6: das Anschlussteil in einer vergrößerten Schnittdarstellung und

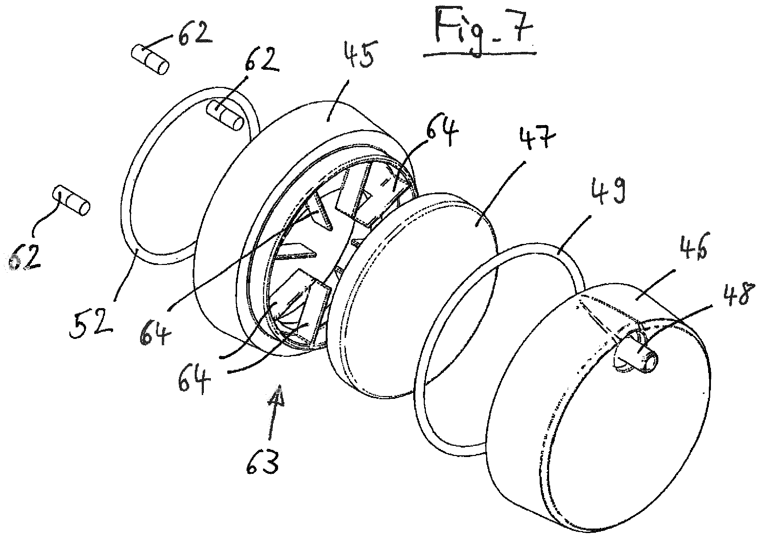

- Fig. 7: das in Fig. 6 gezeigten Anschlussteil in einer perspektivischen Explosionsdarstellung.

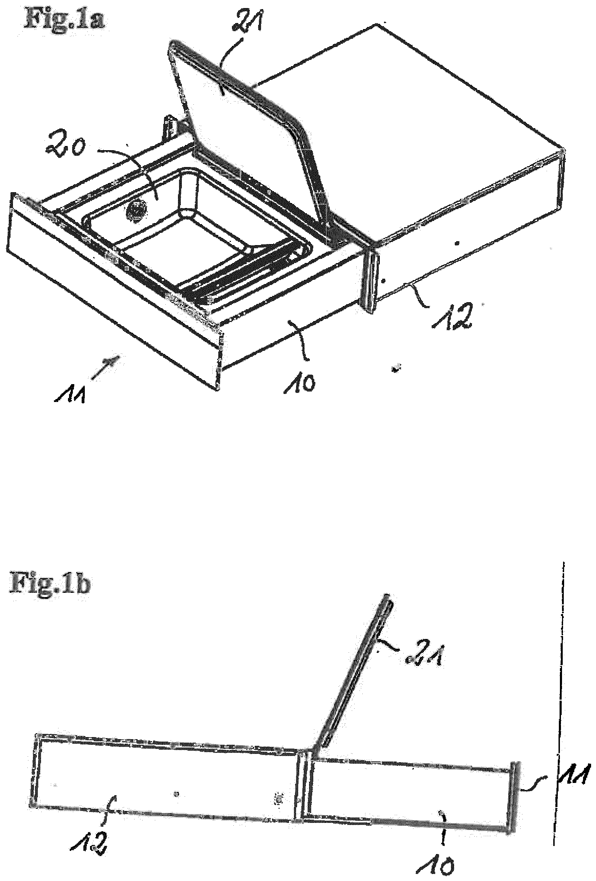

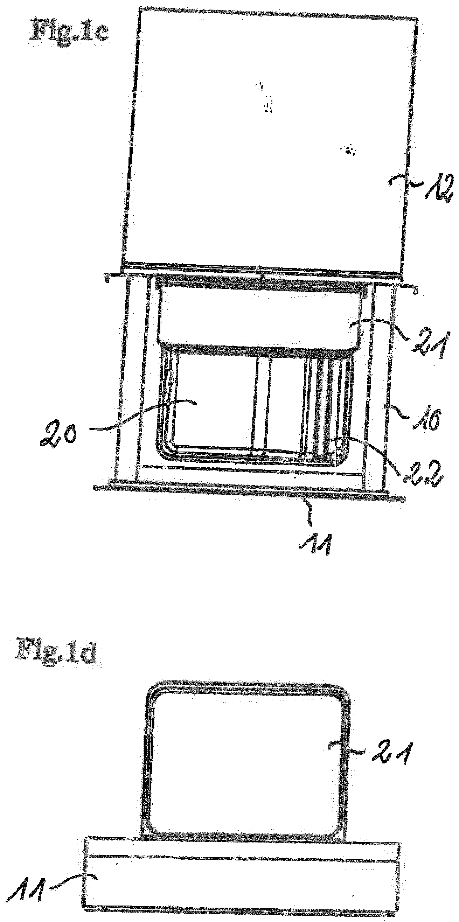

Die vier Figuren 1a - 1d zeigen die erfindungsgemäße Vakuumschublade aus vier unterschiedlichen Blickwinkeln. Figur 1a zeigt eine perspektivische Darstellung von rechts oben, Figur 1b entspricht einer Seitendarstellung, Figur 1c einer Draufsicht und Figur 1d einer Frontansicht. Die Schublade eignet sich für den Einsatz in einem Küchenmöbel, da sie sich durch eine Einbauhöhe von ca. 140 mm auszeichnet und demnach dem Normmaß von Einbauküchen entspricht.

Die Vakuumschublade umfasst einen Schubladenauszug 10, der in einem Schubladenkorpus 12 über seitliche Führungsschienen längsverschieblich geführt ist. Im dargestellten Ausführungsbeispiel ist die Frontabdeckung 11 grifflos, der Schubladenauszug ist als Push-Pull-Einrichtung zum Öffnen und Schließen konstruiert. Innerhalb des Schubladenauszuges ist eine Vakuumkammer 20 gelagert, die mit einer Vakuumpumpe der Vakuumschublade strömungstechnisch gekoppelt ist, um die Luft aus der verschlossenen Vakuumkammer 20 abzupumpen. Die Vakuumkammer 20 kann über den schwenkbar an der Kammer 20 montierten Deckel 21 luftdicht verschlossen werden. Der Deckel 21 selbst kann aus Designgründen aus Glas gefertigt sein.

Für das Versiegeln eines eingelegten Beutels dient ein Schweißbalken 22, der sich im Kammerinneren in Auszugsrichtung der Schublade erstreckt. Ein mit Lebensmitteln befüllter Beutel wird zum Vakuumieren in die Kammer 20 eingelegt und der Deckel 21 luftdicht verschlossen. Nach dem Auspumpen der Kammer 20 mittels der nicht dargestellten Vakuumpumpe kann der Beutel mittels des Schweißbalkens 22 versiegelt werden. Dazu wird die zu versiegelnde Beutelöffnung auf dem Schweißbalken 22 abgelegt, der diesen nach dem Vakuumieren gegen eine Andruckstelle drückt und durch Hitzeeinwirkung versiegelt. Der Balken 22 kann entweder an einen am Deckel 21 befestigten Gegendruckbalken 23 oder gegen eine alternative Anpressfläche gepresst werden.

Die Vakuumpumpe sitzt hinter der Kammer 20 am hinteren Teil des Schubladenauszuges 10. Die Vakuumpumpe ist mit der Vakuumkammer 20 strömungstechnisch gekoppelt und pumpt zur Vakuumerzeugung die Luft aus der Kammer 20 ab. Aufgrund der bodenseitigen Montage der Vakuumpumpe an dem Schubladenauszug 11 wird diese beim Ausfahren des Schubladenauszuges 11 mit der Kammer 20 mitbewegt. Die Vakuumpumpe ist als ölgeschmierte Drehschiebervakuumpumpe ausgestaltet.

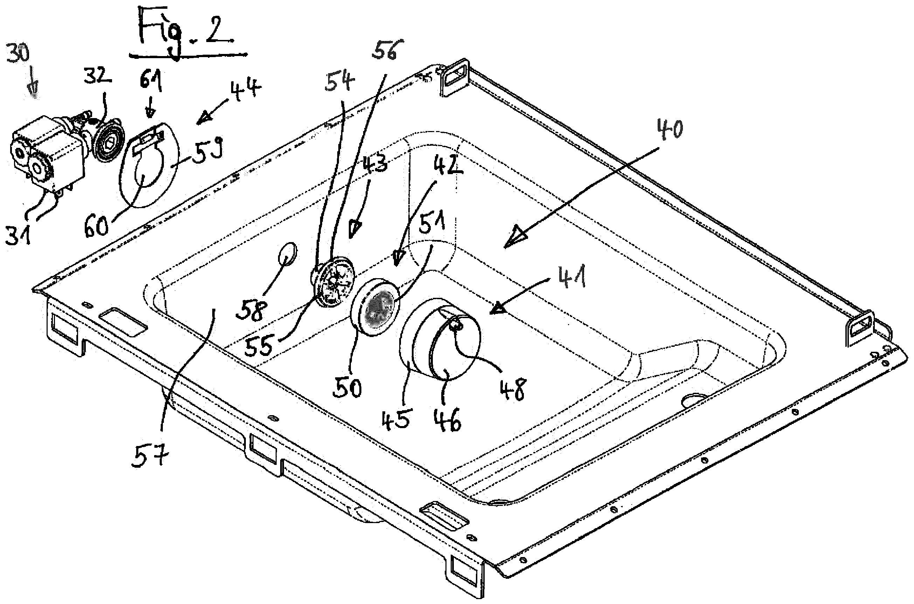

Die Vakuumschublade umfasst eine Montageeinheit 40, an die eine Vakuumpumpe anschließbar ist, wie insbesondere in Fig. 2 gezeigt. Das Ventil 30 ist durch elektrische Kontakte 31 an eine Stromquelle anschließbar. Das Ventil 30 umfasst ferner einen Ansaugstutzen 32, dessen Öffnung zu der Vakuumkammer 20 hin weist. An das Ventil 30 ist eine Vakuumpumpe anschließbar (in der Zeichnung nicht dargestellt).

Die Montageeinheit 40 umfasst ein Filterteil 42, ein Befestigungsteil 43, ein Abstützteil 44 und das Ventil 30. Mit der Montageeinheit 40 ist ein Anschlussteil 41 lösbar verbindbar. Das Anschlussteil 41 besteht aus einem Bodenteil 45, einem Deckelteil 46 und einer Wassersperre 47, die zwischen dem Bodenteil 45 und dem Deckelteil 46 eingeklemmt ist. Das Deckelteil 46 weist auf seiner der Vakuumkammer 20 zugewandten Seite einen Saugstutzen 48 auf. Die Wassersperre 47 ist als Membran ausgebildet. Sie ist durch den O-Ring 49 eingeklemmt. Mit dem Saugstutzen 48 ist ein Saugschlauch vorzugsweise lösbar verbindbar oder verbunden (in der Zeichnung nicht dargestellt).

Das Filterteil 42 umfasst ein Gehäuse 50, in dem ein Feinsieb 51 befestigt ist. Das Feinsieb 51 wird durch einen Pressring 52 an einen Vorsprung des Gehäuses 50 gepresst. Es besteht aus einem Metallgeflecht. Das Metallgeflecht weist vorzugsweise eine Maschenweite < 0,20 mm, ferner vorzugsweise eine Maschenweite < 0,10 mm, besonders vorzugsweise eine Maschenweite < 0,08 mm auf. Das Gehäuse 50 des Filterteils 42 ist im montierten Zustand gegenüber dem Bodenteil 45 des Anschlussteils 41 durch einen Dichtring 53 abgedichtet. Das Feinsieb 51 verhindert das Eindringen von Fremdstoffen in das Ventil 30 der Vakuumpumpe.

Das Befestigungsteil 43 umfasst einen Befestigungsabschnitt 54 und einen Anlageabschnitt 55. Es ist gegenüber dem Gehäuse 50 des Filterteils 42 durch einen Dichtring 56 abgedichtet. Der Dichtring 56 befindet sich am Außenumfang des Anlageabschnitts 55. Er liegt im montierten Zustand am Innenumfang des Gehäuses 50 an.

Die Montageeinheit 40 ist an einer im Wesentlichen vertikalen Seitenwand 57 der Vakuumkammer 20 befestigt. Zu diesem Zweck weist die Seitenwand 57 eine Öffnung 58 auf, deren Durchmesser größer ist als der Durchmesser des Befestigungsabschnitts 54 des Befestigungsteils 43. Der Durchmesser des Anlageabschnitts 55 des Befestigungsteils 43 ist größer als die Öffnung 58. Im montierten Zustand liegt der Anlageabschnitt 55 an der Umgebung der Öffnung 58 an. Der Befestigungsabschnitt 54 durchdringt die Öffnung 58 nach außen. Er kann dort mit dem Ansaugstutzen 32 des Ventils 30 verschraubt werden.

Das Abstützteil 44 umfasst ein Blech 59 aus einem ferromagnetischen Material. Das Blech 59 ist im Wesentlichen eben ausgebildet. Es weist eine zentrale Öffnung 60 auf, deren Durchmesser größer ist als der Befestigungsabschnitt 54 des Befestigungsteils 43 und auch größer als das dem Befestigungsteil 43 zugewandte Ende des Ansaugstutzens 32 des Ventils 30.

Das Abstützteil 44 umfasst ferner einen Sensor 61, der als Reed-Sensor ausgebildet ist. Der Sensor 61 befindet sich auf der dem Befestigungsteil 43 abgewandten Seite der Seitenwand 57. Er zeigt den montierten Zustand des Anschlussteils 41 an.

Im Bodenteil 45 des Anschlussteils 41 sind Magnete 62 angeordnet. Im Ausführungsbeispiel sind drei Magnete 62 vorhanden. Sie sind gleichmäßig über den Umfang des Bodenteils 45 verteilt. Die Magnete 62 befinden sich in Vertiefungen auf der der Seitenwand 57 zugewandten Seite des Bodenteils 45. Einer der Magnete 62 befindet sich im Bereich des Sensors 61. Die Magnete 62 bewirken durch ihr Zusammenwirken mit dem Blech 59 des Abstützteils 44 zum einen, dass das Anschlussteil 41 im montierten Zustand an der Seitenwand 57 der Vakuumkammer 20 festgehalten wird, und zum anderen, dass der Sensor 61 den montierten Zustand des Anschlussteils 41 an der Seitenwand 57 anzeigt.

Die als Membran ausgebildete Wassersperre 47 ist durch eine Stützstruktur 63 abgestützt. Die Stützstruktur 63 ist in dem Bodenteil 45 des Anschlussteils 41 vorgesehen. Sie umfasst mehrere Lamellen 64, die gleichmäßig über den Umfang des Bodenteils 45 verteilt sind. Die Lamellen 64 verlaufen jeweils von der Innenseite des Außenumfangs des Bodenteils 45 nach innen. Sie erstrecken sich über etwa ein Drittel des Durchmessers des Bodenteils 45. Ihre flächige Erstreckung verläuft in Strömungsrichtung, also in Richtung der Längsachse des Anschlussteils 41. Das Deckelteil 46 weist entsprechende Gegenlamellen 65 auf. Die Membran, die die Wassersperre 47 bildet, ist zwischen den Lamellen 64 und den Gegenlamellen 65 eingeklemmt und gegen Verformung gesichert.

Im Betrieb wird zunächst die Montageeinheit 40 an der vertikalen Seitenwand 57 der Vakuumkammer 20 befestigt. Für den Betrachter ist dann aus der Sicht der Vakuumkammer 20 das Filterteil 42 sichtbar. In diesem Zustand kann in der Vakuumschublade ein Vakuum zum Vakuumieren von Lebensmitteln erzeugt werden. Hierfür wird der Deckel 21 verschlossen. Anschließend wird die Vakuumpumpe eingeschaltet, was durch das Schließen des Deckels selbsttätig erfolgen kann.

Wenn ein externes Vakuum erzeugt werden soll, kann bei geöffnetem Deckel 21 das Anschlussteil 41 mit der Montageeinheit 40, nämlich mit dem Filterteil 42, verbunden werden. Durch die Magnete 62 wird der Sensor 61 betätigt, durch den angezeigt werden kann, dass das Erfordernis für ein externes Vakuum besteht. Die Steuerung der Vakuumschublade wird von der Funktion "internes Vakuum" in die Funktion "externes Vakuum" geändert. Insbesondere kann die Software der Steuerung über den Sensor 61 erkennen, dass ein externes Vakuum gewünscht ist.

Gleichzeitig wird das Anschlussteil 41 durch dessen Magnete 62 und deren Zusammenwirken mit dem ferromagnetischen Abstützteil 44 an dem Filterteil 42 und damit auch an der Seitenwand 57 fixiert. An dem Saugstutzen 48 des Anschlussteils 41 wird durch die Vakuumpumpe ein externes Vakuum erzeugt. Durch dieses Vakuum wird das Anschlussteil 41 zusätzlich an dem Filterteil 42 und damit auch an der Seitenwand 57 fixiert. Das externe Vakuum kann durch einen Saugschlauch, der mit dem Saugstutzen 48 vorzugsweise lösbar verbunden ist, auch an einem weiter entfernten Ort erzeugt werden (in der Zeichnung nicht dargestellt).

Die Vakuumpumpe kann durch die Betätigung einer Taste (Stop-Taste) abgeschaltet werden. Ferner kann sich die Vakuumpumpe nach Erreichen eines bestimmten Vakuumwertes abschalten. Wenn die Vakuumpumpe abgeschaltet worden ist, und wenn kein externes Vakuum mehr anliegt, kann das Anschlussteil 41 auf einfache Weise von dem Filterteil 42 und der Seitenwand 57 gelöst werden. Es muss lediglich gegen die Kraft der Magneten 62 abgezogen werden. Dadurch kann auch die Betätigung des Sensors 61 aufgehoben werden, wodurch die Steuerung wieder in die Funktion "internes Vakuum" geändert werden kann.

Beim Vakuumieren strömt die Luft durch den Saugstutzen 48, den Innenbereich des Deckelteils 46, die Wassersperre 47, den Innenbereich des Bodenteils 45, das Feinsieb 51, den Innenbereich des Gehäuses 50 und die zentrale Öffnung 66 des Befestigungsteils 43 in den Ansaugstutzen 32 des Ventils 30.

## Patentansprüche

1. Vakuumschublade zum Vakuumieren von Lebensmitteln mit einer Vakuumkammer (20), die durch einen betätigbaren Deckel (21) luftdicht verschließbar ist, einem Schweißbalken (22), einer Montageeinheit (40), an die eine Vakuumpumpe zum Erzeugen eines internen Vakuums in der Vakuumkammer (20) anschließbar ist, und einem Anschlussteil (41), das mit der Montageeinheit (40) in der Vakuumkammer (20) lösbar verbindbar ist,
**dadurch gekennzeichnet,**
**dass** das Anschlussteil (41) mit einem Saugschlauch verbunden ist, der zum Erzeugen eines externen Vakuums in einem externen Vakuumbehälter außerhalb der Vakuumkammer (20) mit dem externen Vakuumbehälter verbunden ist.

2. Vakuumschublade nach Anspruch 1, **dadurch gekennzeichnet, dass** das Anschlussteil (41) einen oder mehrere Magnete (62) aufweist.

3. Vakuumschublade nach einem der vorhergehenden Ansprüche, **dadurch gekennzeichnet, dass** die Montageeinheit (40) ein vorzugsweise ferromagnetisches Abstützteil (44) aufweist.

4. Vakuumschublade nach einem der vorhergehenden Ansprüche, **dadurch gekennzeichnet, dass** die Montageeinheit (40) einen Sensor (61) aufweist.

5. Vakuumschublade nach Anspruch 4, **dadurch gekennzeichnet, dass** der Sensor (61) an dem Abstützteil (44) angeordnet ist.

6. Vakuumschublade nach einem der vorhergehenden Ansprüche, **dadurch gekennzeichnet, dass** die Montageeinheit (40) einen Feinstfilter (51) gegen Fremdstoffe aufweist.

7. Vakuumschublade nach einem der vorhergehenden Ansprüche, **dadurch gekennzeichnet, dass** das Anschlussteil (41) eine Wassersperre (47) aufweist.

8. Vakuumschublade nach Anspruch 7, **dadurch gekennzeichnet, dass** die Wassersperre (47) als Membran ausgebildet ist.

9. Vakuumschublade nach Anspruch 8, **dadurch gekennzeichnet, dass** die Membran eingeklemmt ist.

10. Vakuumschublade nach Anspruch 8 oder 9, **dadurch gekennzeichnet, dass** die Membran durch eine Stützstruktur (63) abgestützt ist.

11. Möbelstück mit eingebauter Vakuumschublade nach einem der Ansprüche 1 bis 10, insbesondere Küchenschublade mit eingebauter Vakuumschublade nach einem der Ansprüche 1 bis 10.

## Claims

1. A vacuum drawer for vacuuming food having a vacuum chamber (20) which can be closed in an airtight manner by a cover (21) which can be actuated; a sealing bar (22); an installation unit (40) to which a vacuum pump can be connected for generating an internal vacuum in the vacuum chamber (20); and a connector part (41) which is releasably connectable to the installation unit (40) in the vacuum chamber (20),
**characterized in that**
the connector part (41) is connected to a suction hose that is connected to an external vacuum container to generate an external vacuum in the external vacuum container outside the vacuum chamber (20).

2. A vacuum drawer in accordance with claim 1, **characterized in that** the connector part (41) has one or more magnets (62).

3. A vacuum drawer in accordance with one of the preceding claims, **characterized in that** the installation unit (40) has a support part (44) which is preferably ferromagnetic.

4. A vacuum drawer in accordance with one of the preceding claims, **characterized in that** the installation unit (40) has a sensor (61).

5. A vacuum drawer in accordance with claim 4, **characterized in that** the sensor (61) is arranged at the support part (44).

6. A vacuum drawer in accordance with one of the preceding claims, **characterized in that** the installation unit (40) has a superfine filter (51) against foreign bodies.

7. A vacuum drawer in accordance with one of the preceding claims, **characterized in that** connector part (41) has a water barrier (47).

8. A vacuum drawer in accordance with claim 7, **characterized in that** the water barrier (47) is configured as a membrane.

9. A vacuum drawer in accordance with claim 8, **characterized in that** the membrane is clamped.

10. A vacuum drawer in accordance with claim 8 or claim 9, **characterized in that** the membrane is supported by a support structure (63).

11. A piece of furniture, having a built-in vacuum drawer in accordance with one of the claims 1 to 10, in particular a kitchen drawer, having a built-in vacuum drawer in accordance with one of the claims 1 to 10.

## Revendications

1. Tiroir à vide pour mettre des aliments sous vide, comprenant une chambre à vide (20), qui peut être fermée de manière étanche à l'air par un couvercle (21) actionnable, une barre de soudure (22), une unité de montage (40), à laquelle peut être raccordée une pompe à vide pour générer un vide interne dans la chambre à vide (20), et une pièce de raccordement (41), qui peut être reliée de manière détachable à l'unité de montage (40) dans la chambre à vide (20), **caractérisé en ce que**
la pièce de raccordement (41) est reliée à un tuyau d'aspiration, qui, pour générer un vide externe dans un récipient sous vide externe à l'extérieur de la chambre à vide (20), est relié au récipient sous vide externe.

2. Tiroir à vide selon la revendication 1, **caractérisé en ce que** la pièce de raccordement (41) comporte un ou plusieurs aimants (62).

3. Tiroir à vide selon l'une des revendications précédentes, **caractérisé en ce que** l'unité de montage (40) comporte une pièce d'appui (44) de préférence ferromagnétique.

4. Tiroir à vide selon l'une des revendications précédentes, **caractérisé en ce que** l'unité de montage (40) comporte un capteur (61).

5. Tiroir à vide selon la revendication 4, **caractérisé en ce que** le capteur (61) est disposé sur la pièce d'appui (44).

6. Tiroir à vide selon l'une des revendications précédentes, **caractérisé en ce que** l'unité de montage (40) comporte un ultrafiltre (51) contre les substances étrangères.

7. Tiroir à vide selon l'une des revendications précédentes, **caractérisé en ce que** la pièce de raccordement (41) comporte un organe de blocage de l'eau (47).

8. Tiroir à vide selon la revendication 7, **caractérisé en ce que** l'organe de blocage de l'eau (47) se présente sous la forme d'une membrane.

9. Tiroir à vide selon la revendication 8, **caractérisé en ce que** la membrane est coincée.

10. Tiroir à vide selon la revendication 8 ou 9, **caractérisé en ce que** la membrane est soutenue par une structure d'appui (63).

11. Meuble avec tiroir à vide intégré selon l'une des revendications 1 à 10, en particulier tiroir de cuisine avec tiroir à vide intégré selon l'une des revendications 1 à 10.
